# EUROPÄISCHE PATENTANMELDUNG

(11) **EP 0 762 239 A2**
(43) Veröffentlichungstag der Anmeldung: **12.03.1997**
(21) Anmeldenummer: 96110695.2
(22) Anmeldetag: 03.07.1996
(51) Int. Cl.: G03H 1/26, G03H 1/04

(54) **Verfahren zum Vortäuschen von Objekten**

(30) Priorität: 31.08.1995 DE 19532038
(71) Anmelder: Daimler-Benz Aerospace Aktiengesellschaft, 81663 München (DE)
(72) Erfinder: Sepp, Gunther, Dr., 85521 Ottobrunn (DE); Müller, Jörn, Dr., 80636 München (DE)

(57) **Zusammenfassung**

Erfindung bezieht sich auf ein Verfahren zum Vortäuschen von Objekten im Gelände mittels holografischer Aufnahmen, die durch divergente Projektion mit drei Laserwellenlängen farbig und vergrößert rekonstruierbar sind. Ein Ausführungsbeispiel ist beschrieben und in den Figuren der Zeichnung skizziert.

## Beschreibung

Die Erfindung bezieht sich auf ein Verfahren zum Vortäuschen von Objekten gemäß dem Oberbegriff des Anspruchs 1.

Der Stand der Technik sieht zum Vortäuschen von Objekten die Anfertigung und Aufstellung von sogenannten Attrappen vor, die das vorzutäuschende Objekt in mehr oder weniger exakter Realform und Größe darstellen. Abgesehen von dem enormen Fertigungs-, Material- und Transportaufwand, sind die damit zu erzielenden Täuscheffekte nicht nur sehr fraglich, sondern auch sehr "kurzlebig" und nicht variierbar.

Der vorliegenden Erfindung liegt die Aufgabe zugrunde, ein Verfahren der eingangs genannten Art aufzuzeigen, mit dem es ermöglicht wird, Objekte, Hindernisse, aber auch leere Flächen etc. in realer Form und Größe zur Tarnung und Täuschung einem Gegner vorzutäuschen.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung wild ein Ausführungsbeispiel beschrieben und erläutert. Die Figuren der Zeichnung ergänzen diese Erläuterungen. Es zeigen:

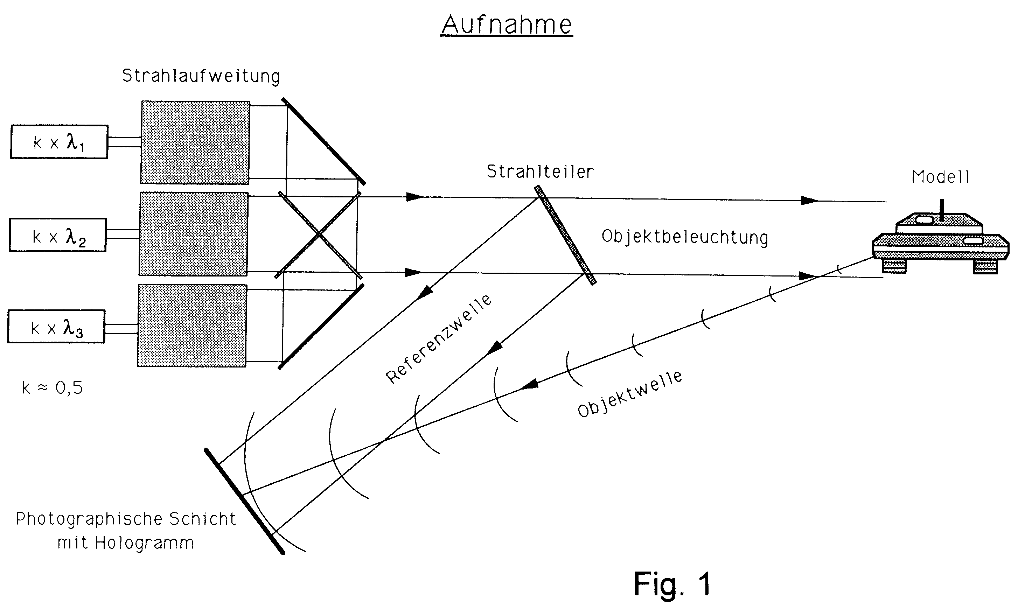

- Fig. 1: ein Schemabild bezüglich der Aufnahme eines zur Täuschung vorgesehenen Objektes,

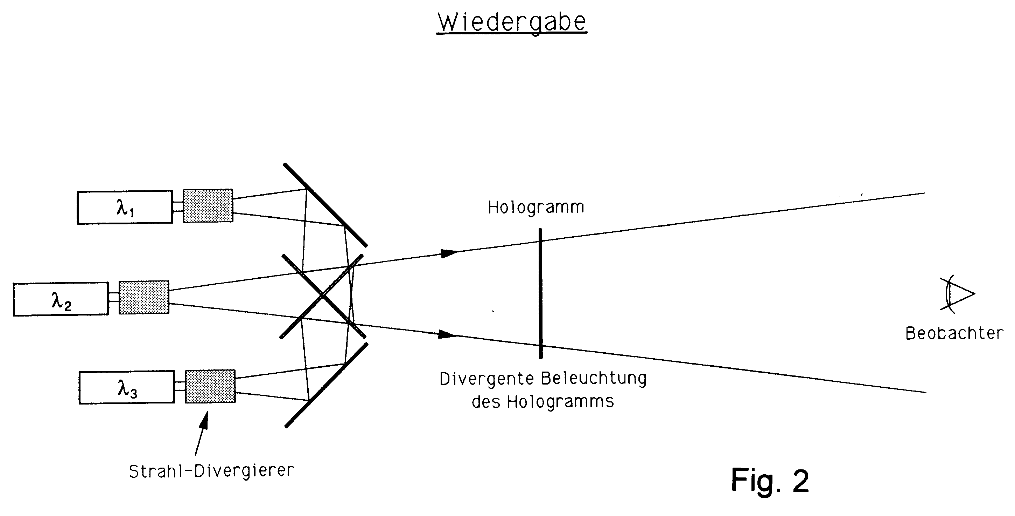

- Fig. 2: ein Schemabild bezüglich der Wiedergabe des zur Täuschung eines Beobachters vorgesehenen Objektes.

Um eine möglichst vielseitige, schnell variierbare und an jeden Ort transferierbare wirklichkeitsgetreue Täuschung zu realisieren, sieht der allgemeine Erfindungsgedanke vor, daß von dein zur Täuschung vorgesehenen Objekt oder verkleinerten Modell mit drei verschiedenen Wellenlängen z.B. rot, grün und blau, die jedoch um einen gemeinsamen Vergrößerungsfaktor zum UV hin verschoben sind, ein Hologramm aufgenommen wird und durch divergente Projektion mit Lasern der drei unverschobenen Wellenlängen das Objekt farbig und vergrößert am gewünschten Ort als virtuelles Bild rekonstruiert wird.

Wie bekannt, ist die Holografie ein mit fotografischen Schichten arbeitendes Registrierverfahren, das im Gegensatz zur Fotografie ohne abbildende Linsen auskommt, weil nicht nur die Leuchtdichteverteilung sondern auch die gesamte Struktur des vom Objekt ausgehenden Wellenfeldes, d.h. die Intensität und Phase des vom Objekt reflektierten Feldes, festgehalten wird. Da von einer fotografischen Schicht die Phase des Lichtes nicht erfaßt wird, müssen die Phasen in Intensitätsunterschiede umgewandelt und registriert werden. Dies ist durch Interferenz der vom Objekt reflektierten Objektwelle mit einer Referenzwelle möglich.

Zu diesem Zweck wird von einem kohärenten Laserstrahl mittels Strahlteiler ein Teil des Lichtes zur Beleuchtung des Objektes und der andere Teil als Referenzstrahl verwendet. Dieser Referenzstrahl und der Objektstrahl werden auf der fotografischen Platte zur Überlagerung gebracht und interferieren miteinander. Das Interferenzmuster, das die Phasendifferenzen zwischen Objektstrahl und Referenzstrahl in Form von Intensitätsschwankungen enthält, wird in der fotografischen Schicht registriert. Das so erhaltene Hologramm weist bei direkter Betrachtung keinerlei Ähnlichkeit mit dem Objekt auf, es besteht aus mikrofeinen, für das Auge nicht deutbaren Interferenzmustern.

Bei geeigneter Beleuchtung jedoch wird aus dem Hologramm der aufgenommene Gegenstand als dreidimensionales - virtuelles und reelles - Bild rekonstruiert. Hierzu wird das Hologramm mit einem kohärenten Laserstrahl durchleuchtet. Durch Beugung des Lichts an den Strukturen des Hologramms entsteht wieder das ursprüngliche Wellenfeld. Ein Beobachter hat damit den Eindruck, als käme dieses Wellenfeld direkt vom Objekt. Im Prinzip kann er somit nicht mehr unterscheiden, ob es sich um das Objekt selbst oder um eine Rekonstruktion aus dem Hologramm handelt. Das Bild erscheint ebenso groß wie das Objekt, ist in der Tiefe scharf, und durch eine Änderung der Blickrichtung können den Lichtverhältnissen bei der Aufnahme entsprechend veränderte Lichtreflexe und vorher verdeckt liegende Bildteile wahrgenommen werden.

Auf einer einzigen fotografischen Schicht sind auch nacheinander mehrere Bilder gemeinsam registrierbar, indem beispielsweise während der Aufnahme die Fotoplatte gedreht oder der Einfallswinkel des Referenzstrahls geändert wird. Durch dieses Verfahren entstehen mehrere Hologramme auf einer Platte, die einander nicht stören. Werden derartige Hologramme bei der Rekonstruktion unter verschiedenen Winkeln betrachtet oder wird die Fotoplatte bei der Betrachtung gedreht, so erscheinen in zeitlicher Folge dreidimensionale bewegte Bilder wie in einem Film.

Bei monochromatischer Beleuchtung des Hologramms bei der Aufnahme und der Rekonstruktion des Objekts geht die Farbinformation verloren. Will man das Objekt nur in der Dämmerung oder bei Nacht rekonstruieren, so kann wegen des dann stark eingeschränkten Farbsehens dieser Verlust in Kauf genommen werden. In diesem Falle genügt also je eine einzige Wellenlänge für Aufnahine und Rekonstruktion, wobei der Vergrößerungsfaktor bei der Wahl einer möglichst kleinen UV-Wellenlänge und einer möglichst großen Wellenlänge (z.B. rot) bei der Rekonstruktion ebenfalls groß wird, so daß das aufzunehmende Modell des Objektes und damit die Größe des Hologramms klein gewählt werden kann.

Bei Rekonstruktion am Tag wird nur dann das Modell realistisch rekonstruiert, wenn keine Farbinformation verloren geht. Dies wird vermieden, indem Laser mit drei im Sichtbaren liegenden Wellenlängen, z.B. rot, grün und blau verwendet werden. Bei eingeschränkten Ansprüchen bei der Rekonstruktion oder bei geeigneter Farbe des Modells genügen auch jeweils zwei verschiedene Wellenlängen für Aufnahme und Rekonstruktion.

Der wesentliche Unterschied dieser Farbhologramme zu den einfarbigen Hologrammen besteht darin, daß sie auch in der Tiefe der fotografischen Schicht eine Struktur aufweisen. Ist die lichtempfindliche Schicht beispielsweise 20 µm dick, so können darin rund 50 Schichten stehender Lichtwellen rigstriert werden. Dies bedeutet, daß von einer Fotoplatte die verschiedenen Komponenten eines Hologramms übereinander aufgezeichnet werden können. Dies nun zu bewerkstelligen, erfordert bei der Aufnahme eine Be-leuchtung des Hologramms von zwei Seiten, nämlich von der einen Seite durch die mehrfarbige Referenzwelle und von der anderen Seite durch die vom Objekt reflektierte Welle. Wegen der größeren Schichtdicke wird das Hologramm meist undurchsichtig, so daß die Rekonstruktion auf dem Wege der Reflexion erfolgen muß, indem es von der Seite der Referenzwelle beleuchtet und betrachtet wird. Ein besonderer Vorteil derartiger Hologramme liegt darin, daß zur Rekonstruktion des Objektes auch weißes, inkohärentes Licht verwendbar ist.

Der eindeutige mathematische Zusammenhang zwischen Hologramm und Objekt macht es möglich, Hologramme mit einem Computer zu berechnen und zeichnerisch herzustellen. Bei der Rekonstruktion derartiger Hologramme mit kohärentem Laserlicht erscheint das Bild eines Objektes, das in Wirklichkeit nicht existiert hat.

Um ein Objekt in einem Hologramm derart aufzeichnen zu können, daß es sich bei der Rekonstruktion dem Betrachter komplett darbietet, muß die zur Registrierung verwendete Fotoplatte mindestens so groß sein, daß sie - vom Beobachter aus gesehen - das Objekt völlig überdeckt. Soll der Beobachter in einem gewissen Bereich um das rekonstruierte Objekt herumgehen können, so muß die fotografische Schicht sogar um den entsprechenden Winkel um das Objekt herumgelegt werden, also z. B. die Form eines Zylinderausschnitts haben, hinter dem sich das zu registrierende Objekt befindet. Dies bedeutet zunächst, daß zur holografischen Aufnahme eines großen Objektes - wie beispielsweise ein Panzer - auch ein mindestens ebenso großer und entsprechend teuerer fotografischer Film verwendet werden müßte.

Um diesen nahzu prohibitiven Aufwand zu reduzieren, wird ein verkleinertes Modell des Objektes holografisch registriert und bei der Rekonstruktion des Hologramms das wieder erscheinende Bild vergrößert erzeugt. Hierzu verwendet man entweder bei der Rekonstruktion des Objektes eine größere Wellenlänge als bei der Aufnahme, oder man stellte das Hologramm bei der Rekonstruktion in einen divergenten Strahlengang. Durch eine Kombination beider Verfahren werden sehr starke Vergrößerungen erreicht. Mit einem fotografischen Film in Form eines Zylinders von 60 cm Durchmesser und 20 cm Höhe kann ein in seinem Innern aufgestelltes Modell eines Panzers im Maßstab 1 : 10 holografisch aufgezeichnet werden. Bei der Rekonstruktion des in natürlichen Farben erscheinenden Objektes werden drei divergente Laserbündel mit den drei Farben Rot, Grün und Blau verwendet, während bei der Aufnahme drei verschiedene, nur schwach divergente Referenz-Laserbündel benutzt werden, deren Wellenlängen um einen gemeinsamen Faktor ins fotografische UV verschoben sind. Die Gesamtvergrößerung des Modells bei der holographischen Rekonstruktion ist dann das Produkt der Verhältnisse der jeweiligen Wellenlängen und Divergenzwinkel bei Rekonstruktion und Aufnahme des Hologramms.

Der Einsatz von Hologrammen kann zum Vortäuschen von Objekten - Personen, Panzer, Geschütze, Bunker, und natürlichen oder künstlichen Hindernissen - Zäune, Bäume usw. - erfolgen, aber auch von Straßen, Brücken, etc. zur Vortäuschung von Passiermöglichkeiten. Durch Vortäuschen von leeren Flächen ist es möglich, aufgestellte Objekte zu tarnen oder durch Überlagerung mit artfremden Strukturen unkenntlich zu machen. Aber auch die Übermittlung von Informationen in Form von Schriftzeichen, stehenden oder bewegten dreidimensionalen Bildern ist gegeben. Letzteres ist zur psychologischen Beeinflussung von Personen interessant.

Zu beachten ist, daß die bei der Rekonstruktion des Hologramms zu verwendenden Strahlstärken der Umgebungshelligkeit anpaßbar sind. Für eine Projektion des Hologramms bei Tageslicht in einen großen Raumwinkelbereich sind sehr hohe Laserleistungen erforderlich. Bei der Anwendung des vorbeschriebene Verfahrens bei Dämmerung oder in der Nacht gibt es diesbezüglich mit den heute zur Verfügung stehenden Lasern keine Probleme. Insbesondere kann man hierfür mit zwei oder nur einer Wellenlänge jeweils für Aufnahme und Rekonstruktion auskommen.

## Patentansprüche

1. Verfahren zum Vortäuschen von Objekten oder Flachen mittels holographisch erstellter Aufnahmen, **dadurch gekennzeichnet,** daß von dem zur Täuschung vorgesehenen Objekt ein verkleinertes Modell hergestellt wird, welches mit mindestens einer zum Ultraviolett hin verschobenen Wellenlänge holographisch aufgenommen wird und durch divergente Projektion mit derselben Anzahl von Laserwellenlängen im Sichtbaren auf das Realmaß vergrößert an gewünschter Stelle im Gelände rekonstruiert wird.

2. Verfahren nach Anspruch 1, **dadurch gekennzeichnet,** daß bei der Aufnahme des Hologramms der kohärente Laserstrahl mittels eines Strahlteilers in einen Teillichtstrahl zur Beleuchtung des Objektes und in den Restlichtstrahl als Referenzstrahl zerlegt wird.

3. Verfahren nach Anspruch 1 und 2, **dadurch gekennzeichnet,** daß das Hologramm des aufgenommenen Objektes mit einem kohärenten Laserstrahl durchleuchtet wird.

4. Verfahren nach einem der Ansprüche 1 bis 3, **dadurch gekennzeichnet,** daß aufgrund großer Schichtdicke undurchsichtige Hologramme im reflektierten Licht betrachtet und zur Rekonstruktion des Hologramms weißes, inkohärentes Licht verwendet wird.

5. Verfahren nach einem der Ansprüche 1 bis 4, **dadurch gekennzeichnet**, daß die Strahlstärken bei der Hologramm-Rekonstruktion der Umgebungshelligkeit angepaßt sind.
